# FASCICULE DE BREVET EUROPEEN

(11) **EP 0 552 384 B1**
(45) Date de publication et mention de la délivrance du brevet: **21.11.2001**
(21) Numéro de dépôt: 91203392.5
(22) Date de dépôt: 23.12.1991
(51) Int. Cl.: H04L 12/56, H04Q 11/04

(54) **Procédé pour réduire le nombre de bits d'un mot binaire représentant une suite d'adresses**
Verfahren zur Reduzierung der Anzahl der Bits in einem binären Adresswort
Procedure for the reduction of the number of bits of a binary address word

(43) Date de publication de la demande: 28.07.1993
(73) Titulaire: ALCATEL, 75008 Paris (FR)
(72) Inventeur: Goubert, Jozef Albert Octaaf, B-9100 Sint-Niklaas (BE); Therasse, Yves, B-1450 Chastre (BE); Pauwels, Bart Joseph Gerard, B-2200 Borgerhout (BE); Wulleman, Raymond Didier Albert, B-1140 Brussel (BE)
(74) Mandataire: Narmon, Gisèle Marie Thérèse

(56) Documents cités:
- IEE PROCEEDINGS PART E vol. 135, no. 1, Janvier 1988, STEVENAGE, GB pages 55 - 59; P. WOLSTENHOLME: 'FILTERING OF NETWORK ADDRESSES IN REAL TIME BY SEQUENTIAL DECODING'
- IEEE TRANS. ON COMMUNICATIONS vol. 38, no. 7, Juillet 1990, NEW YORK, US pages 938 - 942; C. KWOK ET AL: 'CUT-THROUGH BRIDGING FOR CSMA/CD LOCAL AREA NETWORKS'
- IEEE INFOCOM 91 vol. 2, Avril 1991, FLORIDA, US pages 515 - 524; TONG-BI PEI ET AL: 'VLSI IMPLEMENTATION OF ROUTING TABLES: TRIES AND CAMS'
- PHILIPS TELECOM AND DATA SYSTEMS REVIEW vol. 48, no. 2, Juin 1990, HILVERSUM, NL pages 15 - 22; W. KRICK: 'ATM - A TRANSFER CONCEPT NOT ONLY FOR BROADBAND SERVICES'

## Description

L'invention concerne un procédé pour réduire le nombre de bits d'un mot binaire représentant une suite d'adresses.

Il arrive fréquemment qu'une suite d'adresses soit représentée par un mot binaire dont le nombre de bits est très supérieur au nombre de bits strictement nécessaire pour coder toutes les adresses de cette suite. Par exemple, dans le domaine des télécommunications. chaque cellule utilisée pour transmettre des informations dans un réseau de télécommunications à multiplexage temporel asynchrone comporte une en-tête normalisée par le CCITT et formée d'un grand nombre de bits permettant notamment d'identifier une communication à laquelle appartient cette cellule. A l'interface entre deux noeuds du réseau de télécommunications, cette en-tête comporte : douze bits d'identification de faisceau, seize bits d'identification de canal, et quatre bits d'attribut de canal. Chaque faisceau est composé d'un ensemble de canaux et cet ensemble de canaux peut être considéré et traité par un noeud du réseau comme une seule entité, ou bien peut être traité canal par canal, par exemple pour router les communications correspondantes dans différentes directions. Les quatre bits d'attribut de canal permettent notamment de distinguer différents types d'informations qui peuvent être acheminées sur un même canal, par exemple : des informations provenant d'un usager, ou des informations de maintenance.

La valeur attribuée à chacun de ces trente-deux bits est valable seulement pour une liaison entre deux noeuds du réseau. Lors de la traversée de chaque noeud du réseau cette valeur est susceptible d'être modifiée, et remplacée par une valeur lue dans une table dite de traduction. Les trente-deux bits mentionnés précédemment et un numéro désignant une liaison d'entrée du noeud sont utilisés pour accéder à cette table de traduction. La table de traduction fournit : une nouvelle valeur pour les trente-deux bits de l'en-tête, un numéro désignant une liaison de sortie du noeud, et accessoirement des informations utilisées localement pour traiter la cellule. Ces informations sont notamment des informations de signalisation correspondant à chaque cellule et transmises parallèlement à celle-ci.

A l'interface entre deux noeuds du réseau, l'en-tête permettant d'identifier une communication comporte 32 bits, il est donc possible d'identifier 2²⁸ communications différentes et de distinguer 2⁴ attributs différents pour chaque canal. A l'interface entre un utilisateur et le réseau, le champ d'identification d'un faisceau ne comporte que huit bits, le champ d'identification de canal comporte seize bits, et le champ d'attribut de canal comporte quatre bits. Il est donc possible de distinguer 2²⁴ communications différentes, et il est possible de distinguer 2⁴ attributs différents pour chaque canal. En outre, le numéro de la liaison d'entrée d'un noeud permet de distinguer des canaux arrivant sur des liaisons différentes. En pratique, la capacité d'adressage procurée par l'en-tête normalisée est très surabondante par rapport au nombre de canaux arrivant effectivement à un noeud. Cette surabondance présente de sérieux inconvénients pour la réalisation d'une mémoire contenant la table de traduction, si on veut utiliser directement comme adresse de lecture - écriture les trente-deux bits, ou les vingt-huit bits, de l'en-tête. Il est hors de question de réaliser un dispositif de décodage comportant trente-deux ou vingt-huit bits d'entrée pour adresser une mémoire qui n'a à contenir qu'un nombre relativement faible de mots, par exemple quatre kilo-mots, car sa complexité serait disproportionnée vis-à-vis de la faible capacité de la mémoire.

Une première solution connue consiste à utiliser pour l'adressage une suite de bits extraite du champ d'identification de faisceau et du champ d'identification de canal. Le format de cette suite est prédéterminé et son nombre de bits est inférieur au nombre de bits total du champ d'identification de faisceau et du champ d'identification de canal, par exemple 14 ou 16 bits au lieu de 28 ou 32 bits. Ce procédé a pour inconvénient de restreindre la liberté d'un opérateur de réseaux lorsqu'il choisit les valeurs des champs d'identification de faisceau et des champs d'identification de canal.

Une seconde solution (voir, par exemple, P. Wolstenholme, IEE-G, Jan. 1988, no.1, Stevenage GB, p.55-59) consiste à utiliser une mémoire du type adressable par le contenu, pour réaliser un transcodage de l'ensemble des bits du champ d'identification de faisceau et du champ d'identification de canal. Dans le cas où ces champs ont un nombre total de bits égal à 32, cette mémoire doit donc comporter une entrée d'adresse de 32 bits. Elle comporte une sortie fournissant des adresses codées sur 12 bits si, par exemple, le nombre de faisceaux ou de canaux à distinguer est égal à 4096. Cette mémoire de transcodage doit alors comporter 4096 registres de 32 bits et 4096 comparateurs de 32 bits, chaque registre étant chargé avec l'une des valeurs attendue pour le champ d'identification de faisceau et pour le champ d'identification de canal. Cette mémoire doit comporter en outre un dispositif de masquage tel que, pour chaque valeur chargée dans la mémoire, ce dispositif masque certains bits de l'adrese initiale. En l'état actuel de la technologie, une telle mémoire serait très coûteuse à réaliser et ne pourrait pas être intégrée dans un seul circuit intégré.

Une troisième solution consisterait à calculer, au moyen d'un processeur, une adresse ayant un nombre de bits réduit, en fonction d'une adresse initiale de 28 ou de 32 bits, mais cette solution n'est pas applicable pour la traduction des en-têtes de cellules dans un réseau de télécommunications à multiplexage asynchrone temporel, à cause du rythme binaire très élevé qui ne laisse pas suffisamment de temps pour réaliser un tel calcul.

Le but de l'invention est de proposer un procédé permettant de réduire le nombre de bits du mot binaire constituant l'adresse de lecture-écriture d'une telle mémoire de traduction, sans limiter à priori la liberté de choix des valeurs de ces champs; dont la mise en oeuvre soit possible au moyen de composants électroniques classiques facilement intégrables; et dont la mise en oeuvre soit possible à une vitesse élevée correspondant au rythme binaire de transmission dans un réseau de télécommunications à multiplexage temporel asynchrone.

L'objet de l'invention est un procédé pour réduire le nombre de bits d'un mot binaire représentant une suite d'adresses, appelées adresses initiales, caractérisé en ce qu'il comporte au moins une première étape consistant successivement à :
- extraire de chaque adresse initiale au moins un bit ayant un rang fixé;
- constituer une adresse dite de sélection à partir de ce bit ou de ces bits;
- extraire de chaque adresse initiale une suite de bits selon une format sélectionné parmi une pluralité de premiers formats prédéterminés, en fonction de l'adresse de sélection;
- constituer avec cette suite de bits un mot binaire appelé première adresse relative;
- additionner cette adresse relative avec une adresse appelée adresse de base, prédéterminée et associée au format ayant été sélectionné pour déterminer l'adresse relative; pour obtenir une adresse appelée première adresse réduite, ayant un nombre de bits plus petit que celui des adresses initiales;
et en ce que pour prédéterminer une adresse de base associée à l'un des premiers formats, il consiste à :
- considérer successivement les premiers formats;
- prendre 0 pour l'adresse de base associée au premier format considéré parmi lesdits premiers formats;
- prendre pour valeur de chaque adresse de base associée respectivement aux autres premiers formats la somme de : la dernière adresse de base ayant été déterminée pour les premiers formats ayant été considérés précédemment, et de la valeur maximale d'adresse relative obtenable au moyen du dernier premier format considéré précédemment, augmentée d'une unité.

Le procédé ainsi caractérisé permet d'obtenir des adresses dont le nombre de bits est inférieur à celui des adresses initiales, grâce au fait que la suite des adresses réduites est plus proche, que la suite des adresses initiales, d'une suite de valeurs croissantes par saut d'une unité, qui est la forme optimale pour réduire le plus possible le nombre de bits nécessaire pour représenter ces adresses. Par exemple, lorsqu'une suite d'adresses comprend un nombre de valeurs compris entre 2^{q-1} et 2^{q}, le nombre optimal de bits pour représenter cette suite d'adresses est égal à q-1, et la forme optimale de cette suite d'adresses est une suite de valeurs consécutives, partant de 0 par exemple. Si les adresses initiales sont codées sur un nombre de bits supérieur à q-1 on peut constater que certains groupes de bits de l'en-tête ne prennent pas toutes les valeurs binaires possibles, et que pour chaque valeur prise par un groupe de bits donné les autres bits prennent des valeurs qui définissent un sous-ensemble de valeurs d'adresse qui peut être continu ou discontinu mais qui est généralement séparé des autres sous-ensembles par de larges intervalles vides correspondant aux valeurs que le groupe de bits considéré ne prend jamais.

Le procédé selon l'invention, dans sa première étape, permet de supprimer au moins certains des intervalles vides existant entre ces sous-ensembles. Le fait de déterminer une suite d'adresses relatives pour chaque sous-ensemble permet de tirer parti de la continuité, ou de la relative continuité des adresses initiales constituant ces sous-ensembles. Le fait d'additionner une adresse de base aux adresses relatives déterminées pour chaque sous-ensemble équivaut à translater toutes les valeurs d'adresses initiales d'un sous-ensemble de façon à réduire ou supprimer l'intervalle entre deux sous-ensembles consécutifs.

Considérons maintenant les bits autres que ceux du groupe de bits donné, considérés pour la première étape. Parmi ces autres bits, considérons un groupe de bits donné qui ne prend pas toutes les valeurs possibles. Si un tel groupe existe, cela implique que chacun des sous-ensembles considérés au cours de la première étape est lui-même constitués de sous-sous-ensembles de valeurs d'adresse, séparés par des intervalles vides.

Une deuxième étape du procédé selon l'invention équivaut à translater des sous-sous-ensembles d'adresses réduites pour réduire ou supprimer au moins certains des intervalles vides les séparant.

Ces sous-sous-ensembles peuvent eux-mêmes être discontinus. Le nombre d'étapes du procédé peut être augmenté, si la répartition des valeurs d'adresses initiales le permet, jusqu'à obtenir un nombre de bits égal au nombre de bits optimal, pour représenter la suite d'adresses.

D'une façon générale, le procédé selon l'invention comporte, en plus de la première étape, n-1 étapes successives, n étant au moins égal à 2; et la j-ème étape, pour j variant de 2 à n, consiste successivement à :
- extraire de chaque adresse initiale une j-ème suite de bits selon un format sélectionné parmi une pluralité de j-èmes formats prédéterminés tels que cette j-ème suite ait un nombre de bits inférieur à celui d'adresses réduites fournies par la j-1 ième étape; le format étant sélectionné au moyen d'une adresse réduite fournie par la j-1 ième étape;
- constituer avec cette j-ème suite de bits un mot binaire appelé j-ème adresse relative;
- additionner cette j-ème adresse relative avec une adresse, appelée adresse de base, prédéterminée et associée au format ayant été sélectionné; pour obtenir une j-ème adresse réduite remplaçant l'adresse initiale et ayant un nombre de bits plus petit que celui de la j-1 ième adresse réduite;
en ce que pour prédéterminer l'adresse de
base associée à l'un des j-èmes formats, il consiste à :
- considérer successivement les j-èmes formats;
- prendre 0 pour l'adresse de base associée au premier format considéré parmi ces j-èmes formats;
- prendre pour valeur de chaque adresse de base associée respectivement aux autres j-ièmes formats la somme de : la dernière adresse de base ayant été déterminée pour les j-èmes formats ayant été considérés précédemment, et de la valeur maximale d'adresse relative obtenable au moyen du format qui est considéré, augmentée d'une unité.

Les adresses de base ainsi choisies sont telles que la suite d'adresses réduites obtenue avec chaque adresse de base n'a pas de valeurs communes avec les suites d'adresses réduites obtenues avec les adresses de base associées aux autres j-èmes formats.

Un mode de mise en oeuvre particulier est utilisé pour réduire le nombre de bits d'une adresse initiale constituée d'un numéro de liaison et d'une en-tête de cellule de transmission par multiplexage temporel asynchrone. La revendication 3 présente une première variante de ce mode de mise en oeuvre, qui ne considère dans l'en-tête que les champs d'identification de faisceau et d'identification de canal. La revendication 4 présente une seconde variante qui considère en outre, dans l'en-tête, le champ d'attribut de canal.

L'invention sera mieux comprise et d'autres détails apparaîtront à l'aide de la description suivante et des figures l'accompagnant :
- la figure 1 représente la première et la j-ième étape d'un mode de mise en oeuvre général du procédé selon l'invention;
- les figures 2 et 3 illustrent respectivement une première et une deuxième étape de cette mise en oeuvre pour un exemple de suite de d'adresses initiales;
- la figure 4 illustre un exemple de mise en oeuvre du procédé selon l'invention comportant deux étapes et qui est appliqué à des adresses initiales constituées chacune d'un numéro de liaison et d'une en-tête de cellule de transmission par multiplexage temporel asynchrone.

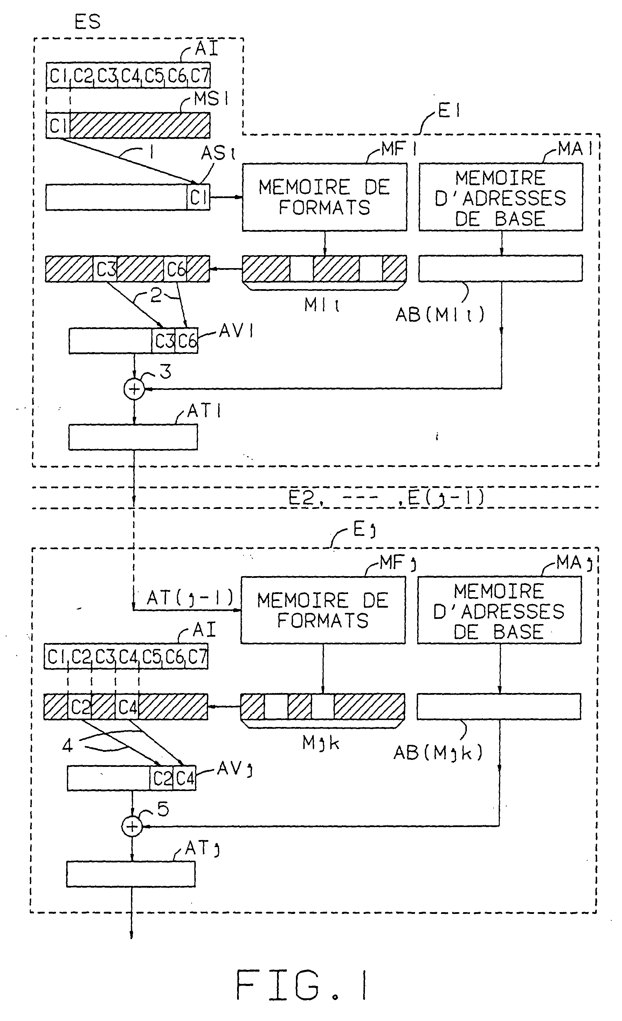

La figure 1 représente la première étape E1 et la j-ème étape Ej d'un mode de mise en oeuvre général du procédé selon l'invention pour réduire le nombre de bits d'un mot binaire AI représentant une suite d'adresses initiales. Par exemple, ce mot binaire comporte 28 bits qui sont référencés demi-octet par demi-octet au moyen des références C1,...C7.

La première étape E1 consiste tout d'abord à extraire de l'adresse initiale une suite de bits en masquant, au moyen d'un masque prédéterminé MS1, les autres bits. Par exemple, le masque MS1 extrait les quatre bits du demi-octet C1. Puis il consiste à constituer avec les bits extraits une adresse dite de sélection, ASi. Pour cela, les bits extraits sont compactés par l'opération référencée 1, c'est-à-dire sont rendus consécutifs à l'intérieur des étages d'un registre. L'adresse de sélection ASi est utilisée pour adresser simultanément deux mémoires MF1 et MA1 appellées respectivement mémoire de formats et mémoire d'adresses de base. La mémoire MF1 contient une pluralité de masques M1i définissant chacun un format prédéterminé correspondant respectivement à l'une des différentes valeurs possibles de l'adresse de sélection ASi. La mémoire MA1 contient une pluralité d'adresses de base, notées AB(M1i), chacune correspondant respectivement à l'une des valeurs de l'adresse de sélection ASi. Dans cet exemple, si le demi-octet C1 constituant l'adresse de sélection peut prendre effectivement seize valeurs, i prend les valeurs 1 à 16.

Chaque masque M1i comporte 28 bits dans cet exemple et permet d'extraire dans l'adresse initiale AI une suite de bits. Par exemple, il permet d'extraire les demi-octets C3 et C6 en masquant tous les autres bits, si on a constaté que ces deux demi-octets codent un ensemble continu de 256 adresses. Les demi-octets C3 et C6 sont compactés par l'opération référencée 2, pour constituer un mot binaire appelé première adresse relative AV1 et qui prend, dans cet exemple, toutes les valeurs de 0 à 255. L'adresse relative AV1 est additionnée, par l'opération référencée 3, à l'adresse de base AB(M1i) fournie par la mémoire MA1, pour obtenir une adresse appelée première adresse réduite AT1. L'adresse réduite AT1 comporte un nombre de bits qui dépend essentiellement du nombre de bits de l'adresse de base AB(M1i) et qui est en général supérieur à celui de l'adresse variable AV1. Le nombre de bits de l'adresse réduite AT1 est toujours inférieur à celui de l'adresse initiale AI.

La détermination d'une adresse base AB(M1i) associée à l'un des premiers formats M1i, consiste à :
- considérer successivement les premiers formats M1i, dans un ordre quelconque;
- prendre 0 pour l'adresse de base associée au premier format considéré parmi lesdits premiers formats;
- prendre pour valeur de chaque adresse de base associée respectivement aux autres premiers formats, la valeur maximale d'adresse réduite obtenable au moyen des premiers formats ayant été considérés précédemment, aumgentée d'une unité.

En pratique, cette valeur maximale d'adresse réduite est calculée en additionnant la dernière adresse de base ayant été déterminée pour les premiers formats ayant été considérés précédemment, et de la valeur maximale d'adresse relative obtenable au moyen du format qui est considéré.

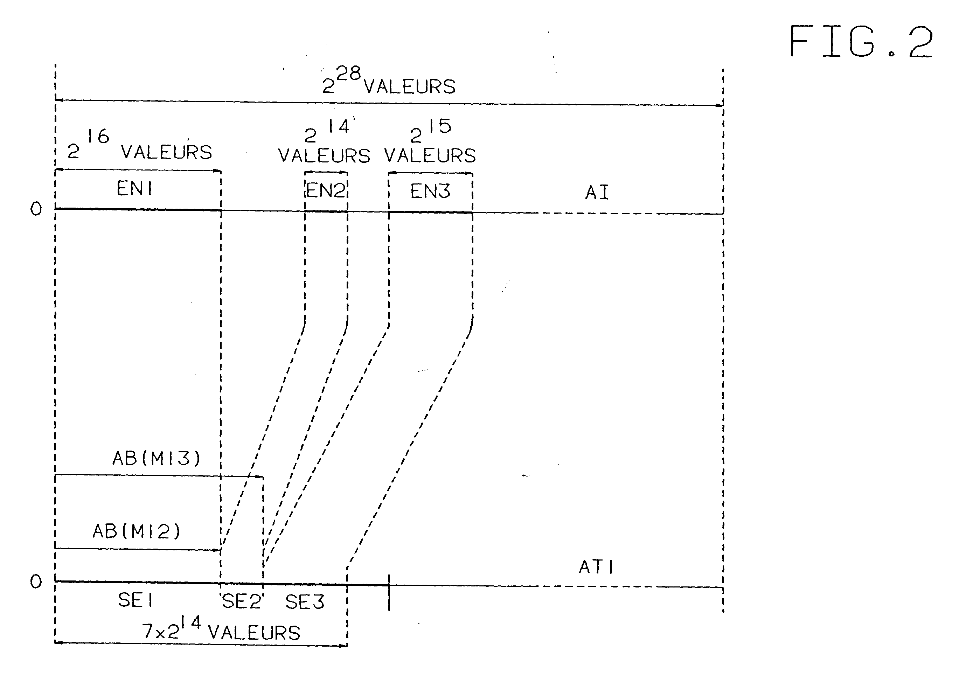

La figure 2 illustre graphiquement cette première étape E1 de ce mode de mise en oeuvre représenté sur la figure 1. Une première ligne de la figure 2 représente l'ensemble des 2²⁸ valeurs d'adresse initiale codables au moyen des 28 bits représentant une suite d'adresses initiales AI. Dans cet exemple, les valeurs d'adresses effectivement codées par ces vingt-huit bits sont au nombre de 7 X 2¹⁴ seulement. Ces valeurs effectivement codées appartiennent, par exemple, à trois sous-ensembles EN1, EN2, EN3, comportant respectivement 2¹⁶, 2¹⁴, 2¹⁵ valeurs consécutives, ces sous-ensembles étant séparées par des intervalles vides correspondant à des valeurs codables mais qui ne sont pas utilisées comme adresse. Pour illustrer la première étape E1, chaque sous-ensemble est supposé continu, c'est-à-dire constitué d'une suite de valeurs consécutives, mais ce n'est qu'un cas particulier. Le premier sous-ensemble commence à la valeur 0. Le premier et le deuxième ensemble sont séparés par un intervalle vide correspondant à 2 X 2¹⁴ valeurs. Le deuxième et le troisième sous-ensembles sont séparés par un intervalle vide correspondant à 2¹⁴ valeurs.

La première étape du procédé selon l'invention fait correspondre à ces trois sous-ensembles disjoints de valeurs d'adresses initiales AI un ensemble continu de valeurs d'adresses réduites AT1, composé de trois sous-ensembles SE1, SE2, SE3 jointifs. Les valeurs d'adresse initiale AI appartenant aux sous-ensembles EN1, EN2, EN3 sont codées respectivement par les changements de valeur de trois suites de bits de AI comportant respectivement 16, 14, et 15 bits.

Comme représenté sur la figure 1, ces trois suites de bits peuvent être extraites respectivement au moyen de trois masques : M11, M12, M13.

| MASQUE | VPI | | | VCI | | | |
|---|---|---|---|---|---|---|---|
| MS1 | 0000 | 0000 | 1111 | 0000 | 0000 | 0000 | 0000 |
| M11 | 0000 | 0000 | 0000 | 1111 | 1111 | 1111 | 1111 |
| M21 | 0000 | 0000 | 0000 | 0011 | 1111 | 1111 | 1111 |
| M31 | 0000 | 0000 | 0000 | 0111 | 1111 | 1111 | 1111 |

Les valeurs prises par ces trois suites de bits constituent trois suites d'adresses relatives AV1 qui se chevauchent : 0 à 2¹⁶-1; 0 à 2¹⁴-1; 0 à 2¹⁵-1. Il est nécessaire de translater ces trois suites de valeurs d'adresses relatives AV1 pour obtenir trois suites de valeurs d'adresses réduites AT1, qui n'aient pas de valeurs communes, et qui soient jointives, si c'est réalisable.

Il est à noter que toutes les suites d'adresses relatives commencent par la valeur 0, car il serait inutile d'extraire de l'adresse AI des bits de valeur constante, c'est-à-dire qui ne prendraient jamais la valeur 0 et resteraient donc à la valeur 1.

Les trois valeurs de l'adresse de sélection ASi sélectionnent respectivement les trois masques M11, M12, M13, et trois valeurs d'adresse de base : AB(M11), AB(M12), AB(M13) qui sont utilisées pour translater trois suites de valeurs d'adresse relative AT1.

La première suite de valeurs d'adresse relative qui est considérée est, par exemple, celle correspondant aux adresses initiales AI du sous-ensemble EN1. Elle n'a pas besoin d'être translatée car elle commence par la valeur 0. L'adresse de base AB(M11) est donc prise égale à 0. Les valeurs d'adresse réduite AT1 correspondant aux adresses initiales AI du sous-ensemble EN1 s'étendent donc de 0 à 2¹⁶-1. C'est le sous-ensemble SE1 sur la figure 2.

La deuxième suite de valeurs d'adresse relative qui est considérée est, par exemple, celle correspondant aux adresses initiales AI du sous-ensemble EN2. Elle a besoin d'être translatée de 4X2¹⁴=2¹⁶ pour être jointive avec la plus grande valeur d'adresse réduite obtenue précédemment, puisque cette suite commence par la valeur 0. L'adresse de base AB(M12) est donc prise égale à 2¹⁶. Les valeurs d'adresse réduite AT1 correspondant aux adresses initiales AI du sous-ensemble EN2 s'étendent donc de 2¹⁶ à 2¹⁶ + 2¹⁴-1 = 5 X 2¹⁴-1. C'est le sous-ensemble SE2 sur la figure 2.

La troisième suite de valeurs d'adresse relative qui est considérée ensuite est, par exemple, celle correspondant aux adresses initiales du sous-ensemble EN3. Elle a besoin d'être translatée de 5 X 2¹⁴ pour être jointive avec la plus grande valeur d'adresse réduite déterminée précédemment, puisque cette suite commence par la valeur 0. L'adresse de base AB(M13) est donc prise égale à 5 X 2¹⁴. Les valeurs d'adresse réduite AT1 correspondant aux adresses initiales AI du sous-ensemble EN3 s'étendent donc de 5X 2¹⁴ à 5 X 2¹⁴ + 2¹⁵-1 = 7 X 2¹⁴-1. C'est le sous-ensemble SE3 sur la figure 2.

Dans cet exemple, les ensembles EN1, EN2, EN3 correspondent à des valeurs d'adresses initiales croissantes et sont considérés successivement dans cet ordre pour obtenir des adresses réduites qui croissent dans le même ordre. C'est un mode de mise en oeuvre préférentiel, mais non obligatoire, du procédé selon l'invention.

Dans cet exemple très simple, une seule étape suffit pour obtenir une suite continue d'adresses réduites AT1 car chaque sous-ensemble EN1, EN2, EN3, de valeurs d'adresse initiale est supposé continu. Un plus grand nombre étapes serait nécessaire en général pour atteindre le nombre de bits le plus petit possible, si ces sous-ensembles étaient discontinus.

Comme représenté sur la figure 1, la jème étape du mode de mise en oeuvre général, pour j au moins égal à 2, consiste tout d'abord à utiliser l'adresse réduite AT(j-1) fournie par la j-1 ième étape, comme adresse pour adresser en lecture une mémoire de formats, MFj, et une mémoire d'adresses de base, MAj. La mémoire MFj fournit par exemple un masque Mjk prédéterminé qui définit un format pour extraire une suite de bits de l'adresse initiale AI. La mémoire MFj stocke p masques différents Mj1,...,Mjp, le nombre p étant généralement très inférieur au nombre de valeurs possibles pour l'adresse réduite AT(j-1). La mémoire MAj fournit une adresse de base AB(Mjk) correspondant au masque Mjk. Le masque Mjk permet d'extraire de l'adresse initiale AI une suite de bits qui est constituée par exemple de deux demi-octets C2 et C4.

D'une manière générale, au cours de la j-ième étape, la suite de bits extraite de l'adresse initiale AI comporte un nombre de bits inférieur à celui de l'adresse réduite AT(j-1) fournie par la j-1 ième étape, car cette suite de bits est choisie telle que ses changements de valeur représente un sous-ensemble de valeurs consécutives de l'ensemble des valeurs de la j-1 ième adresse réduite. Or ce sous-ensemble comporte toujours moins de valeurs que l'ensemble. Dans cet exemple, le masque Mjk permet d'extraire 8 bits de l'adresse initiale. Ces huit bits sont compactés par l'opération référencée 4 pour obtenir un mot binaire constituant une adresse relative AB(Mjk) qui est additionnée par l'opération référencée 5 à l'adresse de base AB(Mjk) fournie par la mémoire MAj. Cette addition fournit une j-ième adresse réduite (ATj) ayant un nombre de bits plus petit que celui de la j-1 ième adresse réduite AT(j-1).

Les adresses de base AB(Mjk), avec k= 1,...,p, sont associées respectivement aux formats définis par les masques prédéterminés Mjk, et sont choisies telles que la suite d'adresses réduites ATj obtenues pour chaque valeur j de 1 à p, n'a pas de valeur commune avec les suites d'adresses réduites obtenues avec les adresses de base associées aux autres j-ièmes formats définis respectivement par les masques Mj1,..., Mjk-1, Mjk+1,...,Mjp. Le nombre p des j-ièmes formats dépend de la façon dont sont réparties les valeurs des adresses initiales. L'adresse de base AB(Mji) est prise égale à 0 pour le premier masque considéré parmi les masques Mij pour une valeur fixée de j; et est prise égale à la valeur maximale des adresses réduites obtenues précédemment pour d'autres masques Mji, pour la même valeur de j, en augmentant cette valeur maximale d'une unité.

Cette valeur maximale des adresses réduites obtenables au moyen des autres masques considérés précédemment, pour une valeur de j fixée, est calculée en additionnant la dernière valeur d'adresse de base ayant été calculée pour ces j-ièmes masques, s'il y en a, et la valeur maximale d'adresse relative obtenable au moyen du masque considéré, c'est-à-dire la valeur maximale de la suite de bits extraite au moyen de ce masque puis compactée. S'il s'agit de la première adresse de base pour cette valeur de j, elle est prise égale à 0.

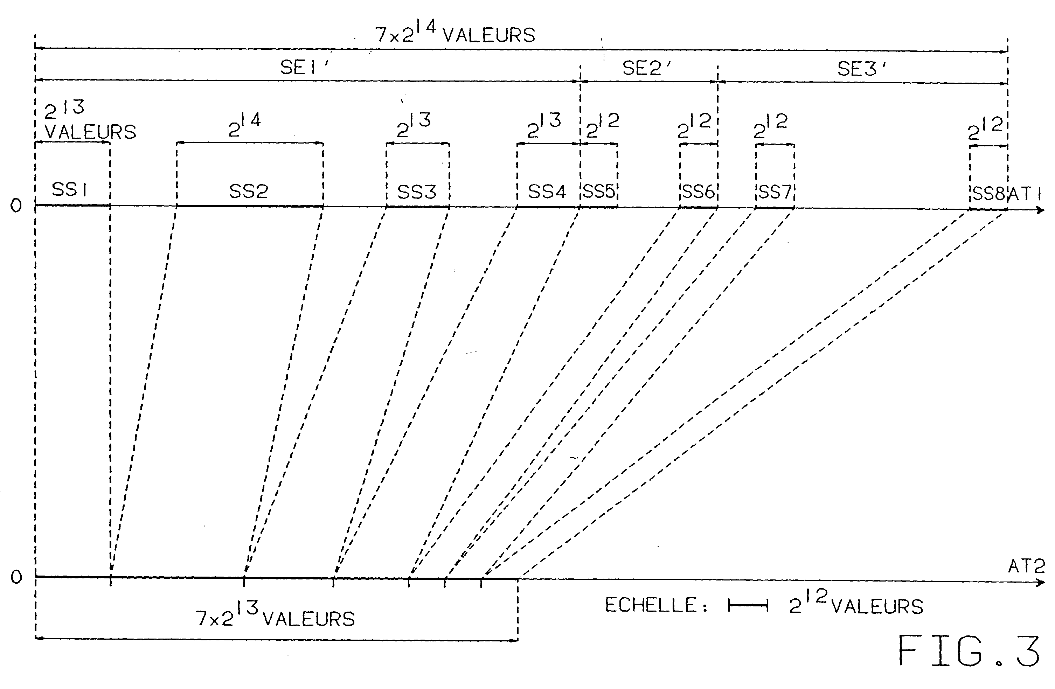

La figure 3 illustre un exemple de mise en oeuvre de la j-ème étape Ej pour j = 2, pour un exemple similaire à celui illustré sur la figure 2, mais en considérant désormais des sous-ensembles qui ne sont pas constitués chacun d'une suite de valeurs consécutives. La première ligne de la figure 3 représente trois sous-ensembles SE1', SE2', SE3' de valeurs de l'adresse réduite AT1 obtenues par des translations au cours d'une première étape analogue à celle décrite en référence à la figure 2, et qui a supprimé les intervalles vides entre ces trois sous-ensembles.

Les adresses réduites AT1 sont codées sur 17 bits, mais leurs valeurs ne s'étendent que de 0 à 7 X 2¹⁴-1 dans cet exemple. D'autre part, ces valeurs ne s'étendent pas de manière continue dans cet intervalle. L'adresse réduite AT1 ne prend en fait que 7 X 2¹³ valeurs qui sont regroupées dans huit sous-sous-ensembles, SS1 à SS8, comportant respectivement : 2¹³, 2¹⁴, 2¹³, 2¹³, 2¹², 2¹², 2¹², 2¹² valeurs consécutives.

Ces sous-sous-ensembles sont séparés par des intervalles vides correspondant à des valeurs possibles mais non utilisées pour constituer des adresses. Les sous-ensembles SE1', SE2' et SE3' n'ont pas tous le même nombre de valeurs. Dans cet exemple, la première valeur du sous-sous-ensemble SS1 est 0, il n'a donc pas besoin d'une translation.

Considérons à titre d'exemple le traitement des sous-sous-ensembles SS1 à SS4 par la deuxième étape E2 du procédé selon l'invention. Parmi toutes ces valeurs de l'adresse réduite AT1 fournies par la première étape E1, celles appartenant au sous-ensemble SS1 permettent de lire dans une mémoire de format MF2 un masque M21. Ce dernier permet d'extraire de l'adresse initiale AI une suite de bits pour constituer une adresse relative AV2. Le masque M21 est choisi de façon à obtenir une valeur de l'adresse relative AV2 pour chaque valeur de l'adresse réduite AT1, et telle que toutes les valeurs d'adresse relative AV2 correspondant aux valeurs d'adresse réduite du sous-sous-ensemble SS1 soient différentes les unes des autres. De même, des masques M22 à M28 sont lues dans la mémoire MF2 pour les adresses réduites AT1 des sous-sous-ensembles SS2 à SS8 respectivement.

Chaque adresse réduite AT1 permet aussi de lire une adresse de base dans une mémoire d'adresses de base, MA2. La mémoire MA2 fournit : une adresse de base AB(M21) pour toutes les adresses réduites AT1 correspondant au sous-sous- ensemble SS1; une adresse de base AB(M22) pour toutes les adresses réduites AT1 correspondant au sous-sous- ensemble SS2; une adresse de base AB(M22) pour toutes les adresses réduites AT1 correspondant au sous-sous-ensemble SS3; et une adresse de base AB(M23) pour toutes les adresses réduites AT1 correspondant au sous-sous-ensemble SS4.

Par exemple, le masque M21 permet d'extraire de l'adresse initiale AI une suite de 13 bits pour constituer 2¹³ valeurs consécutives d'adresse relative AV2 correspondant respectivement aux 2¹³ valeurs consécutives d'adresse réduite AT1 du sous-sous-ensemble SS1.

Les valeurs d'adresses relatives AV2, pour SS1, s'étendent de 0 à 2¹³-1, comme les valeurs d'adresses réduite AT1 pour cet exemple de sous-sous-ensemble SS1. Les valeurs d'adresses relatives AV2 ayant 0 pour valeur minimale, il n'est pas nécessaire de les translater. L'adresse de base AB(M21) est donc prise égale à 0. Les adresses réduites AT2 obtenues pour SS1 s'étendant donc de 0 à 2¹³-1.

Le masque M22 permet d'extraire de l'adresse initiale AI une suite de 14 bits pour constituer 2¹⁴ consécutives valeurs d'adresse relative AV2 correspondant respectivement aux 2¹⁴ valeurs consécutives d'adresse réduite AT1 du sous-sous-ensemble SS2. Les valeurs d'adresse relative AV2, pour SS2, s'étendent de 0 à 2¹⁴-1, alors que les valeurs d'adresse réduite AT1 correspondantes s'étendent de 2¹⁴ à 2¹⁵. Pour obtenir des valeurs d'adresse réduite AT2 jointives avec celles obtenues précédemment pour SS1, il faut translater les valeurs d'adresse relative AV2 obtenues pour SS2, en leur ajoutant la valeur maximale, 2¹³-1, des adresses réduites AT2 obtenues pour SS1 plus une unité. L'adresse de base AB(M22) est donc prise égale à 2¹³. Les adresses réduites AT2 obtenues pour SS2 s'étendent donc de 2¹³ à 3 X 2¹³-1.

Le masque M23 permet d'extraire de l'adresse initiale AI une suite de 13 bits pour constituer 2¹³ valeurs consécutives d'adresse relative AV2 correspondant respectivement aux 2¹³ valeurs consécutives d'adresse réduite AT1 du sous-sous-ensemble SS3. Les valeurs d'adresse relative AV2, pour SS3, s'étendent de 0 à 2¹³-1, alors que les valeurs d'adresse réduite AT1 correspondantes s'étendent de 5 X 2¹³ à 3 X 2¹⁴-1. Pour obtenir des valeurs d'adresse réduite AT2 jointives avec celles obtenues précédemment pour SS2, il faut translater les valeurs d'adresse relative AV2 obtenues pour SS3 en leur ajoutant la valeur maximale, 3 X 2¹³-1, des adresses réduites AT2 obtenues pour SS2, plus une unité. L'adresse de base AB(M23) est donc prise égale à 3 X 2¹³. Les adresses réduites AT2 obtenues pour SS3 s'étendent donc de 3 X 2¹³ à 2¹⁵-1.

Le masque M24 permet d'extraire de l'adresse initiale AI une suite de 13 bits pour constituer 2¹³ valeurs consécutives d'adresse relatives AV2 correspondant respectivement aux 2¹³ valeurs consécutives d'adresse réduite AT1 du sous-sous-ensemble SS4. Les valeurs d'adresse relative AV2, pour SS4, s'étendent de 0 à 2¹³-1. L'adresse de base AB(M24) est prise égale à 2¹⁵. Les adresses réduites AT2 obtenues pour SS4 s'étendent donc de 2¹⁵ à 5 X 2¹³-1.

Ainsi les adresses réduites AT2 obtenues pour tous les sous-sous-ensembles SS1, SS2, SS3, SS4, après translation, ont des valeurs consécutives comme représentées sur la dernière ligne de la figure 3. Il en est de même pour les sous-sous-ensembles SS5 à SS8 des sous-ensembles SE2' et SE3' après leur avoir appliqué la deuxième étape du procédé selon l'invention, de manière analogue à ce qui vient d'être décrit pour les sous-sous-ensembles SS1 à SS4 constituant le sous-ensemble SE1'. L'ensemble des adresses réduites AT2 obtenues pour les trois sous-ensembles SE1' à SE2' comporte 7 x 2¹³ valeurs consécutives et peut donc être codé au moyen d'un mot binaire de 16 bits alors que l'adresse initiale AI est codée par un mot binaire de 28 bits.

Naturellement, si les sous-sous-ensembles SS1, etc, n'étaient pas constitués de valeurs consécutives comme on l'a supposé, il serait envisageable de faire une troisième étape E3 analogue à l'étape E2 pour supprimer des intervalles vides correspondant à des valeurs possibles mais non utilisées pour des adresses.

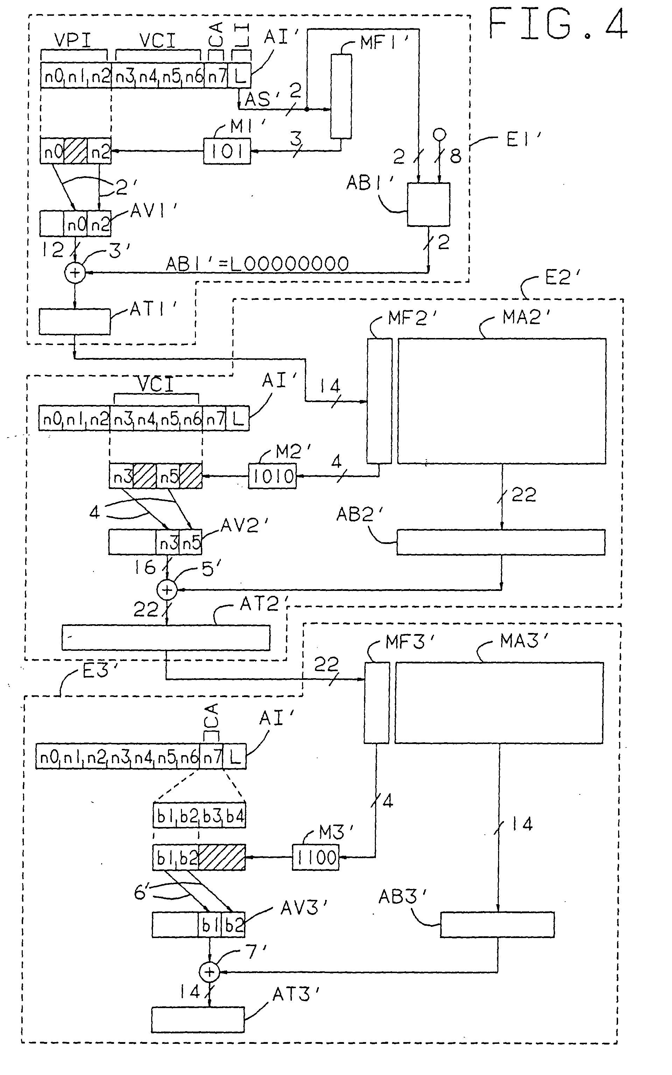

La figure 4 illustre l'application du procédé selon l'invention pour réduire le nombre de bits d'adressage d'une mémoire de traduction dans un noeud de réseau de télécommunications à multiplexage temporel asynchrone. Par exemple, les cellules sont considérées à l'interface entre deux noeuds du réseau. Par conséquent, l'en-tête de chaque cellule comporte : douze bits constituant un champ d'identification de faisceau, VPI; seize bits constituant un champ d'identification de canal, VCI; quatre bits constituant un champ d'attribut de canal, CA. Une adresse initiale AI' est constituée des champs mentionnés ci-dessus, extraits de l'en-tête de chaque cellule, et d'un champ LI constitué de deux bits identifiant la liaison sur laquelle arrive une cellule à l'entrée du noeud considéré.

Dans cet exemple, chaque liaison peut recevoir des en-têtes pouvant prendre chacune 16 valeurs différentes dans le champ VPI, alors que celui-ci permet de coder jusqu'à 2¹² valeurs. D'autre part, pour chaque valeur du champ VPI un certain nombre de bits du champ VCI sont utilisés pour représenter des adresses identifiant des canaux et les autres bits du champ VCI restent inutilisés. La détermination des masques et des adresses de base pour chaque étape du procédé découle des valeurs utilisées et des valeurs inutilisées par l'opérateur du réseau, et elle découle aussi de la hiérarchie des différents champs constituant l'adresse, cette hiérarchie étant imposée par les normes définissant l'en-tête de cellule. L'ordre hiérarchique est le suivant :
- les valeurs possibles du champ de numéro de liaison LI;
- les valeurs possibles du champ identificateur de faisceau VPI;
- les valeurs possibles du champ identificateur de canal, VCI, pour chaque faisceau;
- les valeurs possibles du champ attribut de canal CA.

Il y a généralement une suite de valeurs consécutives dans le champ VPI pour chaque valeur du champ LI. Il y a généralement une suite de valeurs consécutives dans le champ VCI, pour chaque valeur du champ VPI. Autrement dit, une liaison reçoit généralement quelques faisceaux composés chacun de nombreux canaux portant des numéros consécutifs. Cette hiérarchie de l'utilisation des bits de l'adresse initiale AI' conduit à considérer successivement en trois étapes : les champ VPI et L; puis le champ VCI; puis le champ d'attribut de canal CA.

Sur la figure 4, les douze bits du champ VPI sont représentés sous la forme de trois demi-octets n0, n1,n2. Les seize bits du champ VCI sont représentés sous la forme de quatre demi-octets n3, ..., n6. Les quatre bits du champ CA sont représentés sous la forme d'un demi-octet n7. Les deux bits du champ LI sont notés L. Dans cet exemple, le noeud considéré possède des entrées pour quatre liaisons. Le champ LI peut donc prendre quatre valeurs.

Une première étape E1' consiste à extraire de chaque adresse initiale AI', possédant 34 bits, les deux bits L du numéro de la liaison, LI. Ces deux bits sont utilisés comme adresse de sélection AS' pour adresser une mémoire MF1' contenant quatre mots de trois bits, M1', définissant chacun un masque pour extraire une suite de bits du champ VPI. Chaque masque comporte douze bits. Chaque bit du mot M1' représente un quart du masque : un bit de valeur 0 représentant 0000, et un bit de valeur 1 représentant 1111. Dans l'exemple représenté sur la figure 4, le mot M1' = 101 représente un masque qui élimine le demi-octet n1 et extrait les demi-octets n0 et n2 du champ VPI.

L'opération suivante, notée 2', consiste à compacter les bits extraits du champ VPI pour constituer une adresse relative AV1' qui peut comporter dans cet exemple jusqu'à 14 bits. L'adresse AV1' est additionnée, par l'opération référencée 3', à une adresse de base AB1' pour obtenir une valeur d'adresse réduite AT1'.

Dans cet exemple, l'ensemble des valeurs d'adresse initiale AI' comporte quatre sous-ensembles de 256 valeurs consécutives, lorsqu'on considère une valeur donnée du champ LI identifiant une liaison d'entrée. Les valeurs consécutives de chaque sous-ensemble sont dûes aux changments de valeur de 8 bits parmi les 12 bits du champ VPI. C'est pourquoi chaque masque défini par un mot M1' sélectionne 8 bits du champ VPI.

Les adresses relatives AV1' obtenues ont des valeurs s'étendant de 0 à 255 pour chacun des sous-ensembles. Les adressés relatives AV1' correspondant à un premier sous-ensemble n'ont pas besoin d'être translatées. Il suffit de prendre une adresse de base AB1' égale à 0. Les adresses réduites AT1' correspondant au premier sous-ensemble s'étendent donc de 0 à 255.

Les adresses relatives AV1' correspondant à un deuxième sous-ensemble doivent être translatées de 256 pour que les adresses réduites AT1' ainsi obtenues soient jointives avec celles obtenues pour le premier sous-ensemble. L'adresse de base AB1' est alors prise égale à 256 pour le deuxième sous-ensemble. Les adresses réduites AT1' correspondant au deuxième sous-ensemble s'étendent donc de 256 à 511.

Les adresses relatives AV1' correspondant à un troisième sous-ensemble doivent être translatées de 512 pour que les adresses réduites AT1' ainsi obtenues soient jointives avec celles obtenues pour le deuxième sous-ensemble. L'adresse de base AB1' est alors prise égale à 512 pour le deuxième sous-ensemble. Les adresses réduites AT1' correspondant au deuxième sous-ensemble s'étendent donc de 512 à 767.

Les adresses relatives AV1' correspondant à un quatrième sous-ensemble doivent être translatées de 768 pour que les adresses réduites AT1' ainsi obtenues soient jointives avec celles obtenues pour le troisième sous-ensemble. L'adresse de base AB1' est alors prise égale à 768 pour le troisième sous-ensemble. Les adresses réduites AT1' correspondant au troisième sous-ensemble s'étendent donc de 768 à 1023.

Dans cet exemple d'application, il n'est pas nécessaire d'adresser une mémoire d'adresses de base pour obtenir une valeur d'adresse de base AB1' pour chaque valeur de la suite de bits extraite de l'adresse initiale AI'. L'adresse de base AB1' est prise égale à la valeur L du champ LI suivie de 8 bits, 0000 0000, de poids plus faible. La valeur décimale du mot binaire ainsi constitué est respectivement : 0, 256, 512, 768, pour L = 00,01, 10, 11. L'opération 3' fournit une adresse réduite AT1' comportant 14 bits.

Il est à remarquer qu'un autre mode de mise en oeuvre du procédé selon l'invention est possible pour cette première étape E1', dans cette application. L'ensemble des valeurs d'adresse initiale AI' comporte 256 sous-ensembles contitués de 4 valeurs consécutives lorsqu'on considère les quatre valeurs possibles du champ LI pour chacune des 256 valeurs prises par le champ VPI. Il est donc possible d'extraire les deux bits du champ LI pour constituer une adresse relative AT1' = L pouvant prendre les valeurs 0, 1, 2, 3; et de translater chacune de ces 256 suites de quatre valeurs au moyen de 256 adresses de base AB1'. Le masque sélectionnant les deux bits du champ LI est toujours le même, par conséquent il n'est pas nécessaire de prévoir une mémoire de format. Par contre, il faut prévoir une mémoire d'adresses de base, adressée par les 12 bits du champ VPI, et contenant les 256 valeurs d'adresse de base : 0, 4, 8, 12, 16,...,1020.

L'étape E2' consiste à adresser une mémoire de formats MF2' et une mémoire d'adresses de base, MA2', au moyen de l'adresse réduite AT1'. La mémoire MF2' stocke des mots binaires M2' de quatre bits, qui définissent chacun un format pour extraire une suite de bits parmi les 16 bits du champ VCI. L'extraction des bits est réalisée par un masquage sur 16 bits. Chaque bit représentant un quart du masque : un bit de valeur 0 représentant 0000, et un bit de valeur 1 représentant 1111. Dans l'exemple représenté sur la figure 4, la mémoire MF2' fournit un mot binaire M2' = 1010 représentant un masque qui permet de sélectionner les demi-octets n3 et n5 dans le champ VCI. Une opération référencée 5' consiste ensuite à compacter ces demi-octets pour constituer une adresse relative AV2' qui comporte donc huit bits dans cet exemple, et qui dans tous les cas ne dépasse pas seize bits, le nombre de bits du champ VCI.

Simultanément, la mémoire d'adresses de base MA2' fournit une adresse de base AB2' comportant 22 bits, associée au mot M2'. Une opération 5' consiste ensuite à additionner chaque adresse relative AV2' à l'adresse de base AB1' pour obtenir une adresse réduite AT2' comportant 22 bits alors que l'adresse initiale AI' en comporte 34.

Les adresses de base AB2' sont choisies telles que la suite d'adresses réduites AT2' obtenue pour chaque adresse de base n'a pas de valeur commune avec les suites d'adresses réduites obtenues avec les autres adresses de base. Le choix de ces adresses de base dépend donc de la façon sont réparties les valeurs des champs VCI et VPI.

En pratique, ce choix consiste à :
- déterminer quels sont les sous-ensembles de l'ensemble de valeurs de VCI qui sont continus ou presque continus; généralement il y a un sous-ensemble continu de valeurs de VCI pour chaque valeur effectivement prise par la réunion des champs VPI et LI;
- en déduire, pour chaque sous-ensemble, quels sont les bits du champ VCI qui varient et ceux qui ne varient pas;
- utiliser, pour chaque sous-ensemble, les bits qui varient, pour constituer des valeurs d'adresse relative commençant toujours par la valeur 0; autrement dit, constituer un masque sélectionnant uniquement ces bits;
- considérer successivement chaque sous-ensemble; prendre pour adresse de base associée à son masque, la plus grande valeur d'adresse réduite correspond au sous-ensemble considéré juste avant, s'il y a en a; sinon prendre une adresse de base égale à 0; puis calculer la plus grande valeur d'adresse réduite correspondant au sous-ensemble considéré, lui ajouter une unité pour obtenir l'adresse de base. La plus grande valeur d'adresse réduite est calculée en additionnant la dernière adresse de base calculée précédemment et la valeur maximale d'adresse relative obtenable au moyen du masque considéré.

La troisième étape E3' consiste d'abord à lire une mémoire de formats MF3' et une mémoire d'adresses de base MA3' à l'adresse AT2' pour y lire respectivement un masque M3' et une adresse de base AB3'. Le masque M3' comporte quatre bits et il est stocké directement sous cette forme dans la mémoire MF3'. Dans l'exemple représenté, le masque M3' est constitué du mot binaire 1100 et permet d'extraire les deux premiers bits du demi-octet n7 constituant le champ d'attribut de canal CA, dans l'adresse initiale AI'. Dans cet exemple, les deux bits extraits sont ceux qui identifient le type des données transmises dans la cellule ayant l'en-tête considérée. Les deux bits extraits, b1 et b2, sont ensuite compactés par l'opération référencée 6' pour constituer une adresse relative AV3'.

L'adresse de base AB3' fournie par la mémoire MA3' comporte 14 bits. Elle est additionnée à l'adresse relative AV3' par l'opération 7' pour obtenir une adresse réduite AT3' ne comportant que 14 bits, alors que la deuxième adresse réduite AT2' fournie par la deuxième étape E2' comporte 22 bits, et alors que l'adresse initiale AI' comporte 34 bits.

Les adresses de base AB3' sont choisies de manière analogue à celle décrite ci-dessus pour les adresses de base AB2', en considérant la répartition des valeurs prises par le champ CA, pour chaque valeur effectivement prise par la réunion des champs VPI, VCI, LI.

Les mémoires de formats MF1', MF2', MF3' et les mémoires d'adresses de base MA2', MA3' peuvent être des mémoires classiques à accès aléatoire, puisqu'il n'y a pas de problème de taille ni de rapidité. L'adresse réduite AT3' comportant seulement 14 bits au lieu de 34, il est donc possible d'utiliser pour la mémoire de traduction une mémoire classique à accès aléatoire, chargée avec les traductions des en-têtes et avec des données nécessaires pour le routage de chaque cellule. Les opérations 2', 4', 6' de compactage de bits peuvent être réalisées au moyen de multiplexeurs classiques. Les opérations d'addition 3', 5', 7' peuvent être réalisées au moyen d'additionneurs classiques.

Dans l'application à la traduction des en-têtes de cellules, une variante concerne la traduction à l'entrée du premier noeud du réseau, à l'interface entre le réseau et à l'utilisateur. Dans ce cas, le champ VPI ne comporte que huit bits, ce qui simplifie un peu le travail de réduction du nombre de bits.

Une autre variante concerne le cas d'un noeud qui transmet un ou plusieurs faisceaux en étant transparent pour les canaux, c'est-à-dire en retransmettant tous les canaux d'un même faisceau vers une même liaison de sortie et en ne modifiant pas le contenu du champ VCI. Dans ce cas, la réduction du nombre de bits est simplifiée, puisqu'il suffit de réduire uniquement le nombre de bits du champ VPI pour adresser une mémoire de traduction, et de transmettre sans traduction le champ VCI.

La portée de l'invention ne se limite pas aux exemples de mise en oeuvre décrits ci-dessus.

Le nombre d'étapes à réaliser pour réduire le nombre de bits d'une adresse initiale est variable en fonction de l'application, puisque ce nombre dépend du nombre de niveaux hiérarchiques caractérisant la configuration des champs composant l'adresse initiale.

Par exemple une autre application consiste à réduire le nombre de bits de l'identificateur d'un terminal ou d'une application dans un réseau de télécommunications. Une recommandation E164 du CCITT définit cet identificateur comme une suite de seize chiffres décimaux ou seize champs de quatre bits. Ces seize champs indépendants permettent de constituer jusqu'à seize niveaux hiérarchiques distincts dans le champ d'adressage, qui permettent donc de réaliser jusqu'à seize étapes pour réduire le nombre de bits de cette identificateur.

Diverses variantes de réalisation sont possibles pour l'extraction d'une suite de bits dans l'adresse initiale. Il est possible de stocker un masque comportant autant de bits que le champ à masquer, mais il est aussi possible de stocker un nombre de bits plus faible représentant néanmoins le format des bits à extraire, par exemple en indiquant le rang du premier bit à extraire et le rang du dernier bit à extraire pour chacune des suites de bits consécutifs à extraire à l'intérieur de l'adresse initiale.

## Revendications

1. Procédé pour réduire le nombre de bits d'un mot binaire (AI) représentant une suite d'adresses, appelées adresses initiales, **caractérisé en ce qu'**il comporte au moins une première étape (E1) consistant successivement à :
- extraire de chaque adresse initiale (AI) au moins un bit (C1) ayant un rang fixé;
- constituer (1) une adresse dite de sélection (AS) à partir de ce bit ou de ces bits (C1);
- extraire de chaque adresse initiale (AI) une suite de bits (C3, C6) selon une format (M1i) sélectionné parmi une pluralité de premiers formats prédéterminés, (M11, M12, M13, M14) en fonction de l'adresse de sélection;
- constituer (2) avec cette suite de bits (C3, C6) un mot binaire appellé première adresse relative (AV1);
- - additionner cette première adresse relative avec une adresse appelée adresse de base (AB(M1i)), prédéterminée et associée au format (M1i) ayant été sélectionné pour déterminer cette première adresse relative; pour obtenir une adresse appelée première adresse réduite (AT1) ayant un nombre de bits plus petit que celui des adresses initiales (AI);
et **en ce que** pour prédéterminer une adresse de base (AB(M1i) associée à l'un (M1i) des premiers formats il consiste à :
- considérer successivement les premiers formats;
- prendre 0 pour l'adresse de base associée au premier format considéré parmi lesdits premiers formats;
- prendre pour valeur de chaque adresse de base associée respectivement aux autres premiers formats, la somme de : la dernière adresse de base ayant été déterminée pour les premiers formats ayant été considérés précédemment, et de la valeur maximale d'adresse relative obtenable au moyen du dernier premier format considéré précédemment, augmentée d'une unité.

2. Procédé selon la revendication 1, **caractérisé en ce qu'**il comporte en outre n-1 étapes successives, n étant au moins égal à 2; et **en ce que** la j-ème étape, pour j variant de 2 à n, consiste successivement à :
- extraire de chaque adresse initiale (AI) une j-ème suite de bits (C2, C4) selon un format (Mjk) sélectionné parmi une pluralité de j-ème formats prédéterminés tels que cette j-ème suite ait un nombre de bits inférieur à celui d'adresses réduites (AT (j-1)) fournies par la j-1 ième étape; le format étant sélectionné au moyen d'une adresse réduite (AT(j-1)) fournie par la j-1 ième étape;
- constituer avec cette j-ième suite de bits (C2, C4) un mot binaire (AVj) appelé j-ème adresse relative;
- additionner cette j-ième adresse relative (AVj), avec une adresse appelée adresse de base (AB(Mjk)) prédéterminée et associée au format (Mjk) ayant été sélectionné; pour obtenir une j-ème adresse réduite (ATj) remplaçant l'adresse initiale (AI) et ayant un nombre de bits plus petit que celui de la j-1 ième adresse réduite (AT(j-1));
et **en ce que** pour prédéterminer l'adresse de base (AB(Mjk)) associée à l'un (Mjk) des j-èmes formats, il consiste à :
- considérer successivement les j-èmes formats;
- prendre 0 pour l'adresse de base associée au premier format considéré parmi ces j-èmes formats;
- prendre pour valeur de chaque adresse de base associée, respectivement aux autres j-ièmes formats, la somme de la dernière adresse de base ayant été déterminée pour les j-èmes formats ayant été considérés précédemment, et de la valeur maximale d'adresse relative obtenable au moyen du format qui est considéré, augmentée d'une unité.

3. Procédé selon la revendication 2, appliqué pour réduire le nombre de bits d'une adresse initiale (AI') constituée d'un numéro de liaison (LI) et d'une en-tête de cellule de transmission par multiplexage temporel asynchrone, cette en-tête comportant : un champ d'identification de faisceau virtuel (VPI), un champ d'identification de canal virtuel (VCI), et un champ d'attribut de canal (CA); chaque faisceau étant un ensemble de canaux;
**caractérisé en ce qu'**il comporte au moins deux étapes (E'1, E'2); et **en ce que** :
- pour constituer chaque adresse de sélection (AS'), il consiste à extraire de chaque adresse initiale (AI') le numéro de liaison (LI);
- pour constituer chaque première adresse relative (AT'1), il consiste à extraire de chaque adresse initiale (AI') une suite de bits (n0, n2) appartenant au champ d'identification de faisceau (VPI);
- pour prédéterminer les premières adresses de base (AB1'), associées respectivement à des premiers formats (MF1') correspondant respectivement aux adresses de sélection (AS'), il consiste à prendre directement les adresses de sélection (AS') en leur adjoignant des bits de poids plus faible et de valeur nulle (0000 0000);
- pour constituer chaque deuxième adresse relative (AV2'), il consiste à extraire de chaque adresse initiale (AI') une suite de bits (n3, n5) appartenant au champ d'identification de canal virtuel (VCI).

4. Procédé selon la revendiction 3, **caractérisé en ce qu'**il comporte en outre une troisième étape (E3'); et **en ce que** pour constituer chaque troisième adresse relative (AV3') il consiste à extraire de chaque adresse initiale (AI') une suite de bits (b1, b2) appartenant au champ d'attribut de canal (CA).

## Claims

1. A method for reducing the number of bits in a binary word (AI) which represents a series of addresses, called initial addresses, **characterized in that** they include at least a first step (E1) which consists successively in:
- extracting from each initial address (AI) at least one bit (C1) with a fixed rank;
- forming (1) an address called the selection address (AS) from this bit or bits (C1);
- extracting from each initial address (AI) a series of bits (C3, C6) using a format (M1i) selected from multiple predetermined first formats (M11, M12, M13, M14), as a function of the selection address;
- forming (2) with this series of bits (C3, C6) a binary word called the first relative address (AV1);
- adding this first relative address to an address called the predetermined basic address (AB(M1i)) associated with the format (M1i) selected to determine this first relative address; to obtain an address called the first reduced address (AT1) with a lesser number of bits than the one in the initial addresses (AI);
and **in that** to predetermine a basic address (AB(M1i)) associated with the one (M1i) in the first formats, it consists in:
- considering successively the first formats;
- taking 0 for the basic address associated with the first format considered from the said first formats;
- taking for the value of each basic address associated respectively with the other first formats, the sum of: the last basic address determined for the previously considered first formats, and the maximum relative address value which can be obtained using the last previously considered first format incremented by one unit.

2. A method according to claim 1 **characterized in that** it also includes n-1 successive steps, where n is at least equal to 2; and **in that** the jth step, where j ranges between 2 and n, consists successively in:
- extracting from each initial address (AI) a jth series of bits (C2, C4) using a format (Mjk) selected from multiple predetermined jth formats such that this jth series has a lesser number of bits than that of the reduced addresses (AT (j-1)) provided by the j-1th step; the format being selected using a reduced address (AT (j-1)) provided by the j-1th step;
- forming with this jth series of bits (C2, C4) a binary word (AVj) called the jth relative address;
- adding this jth relative address (AVj) to an address called the predetermined basic address (AB(Mjk)) associated with the selected format (Mjk); to obtain a jth reduced address (ATj) which replaces the initial address (AI) and has a number of bits lesser than that of the j-1th reduced address (AT(3-1));
and **in that** to predetermine the basic address (AB(Mjk)) associated with one (Mjk) in the jth formats, it consists in:
- considering successively the jth formats;
- taking 0 for the basic address associated with the first format considered from these jth formats;
- taking for value of each associated basic address, respectively with the other jth formats, the sum of the last basic address determined for the previously considered jth formats, and the maximum relative address value which can be obtained using the considered format incremented by one unit.

3. A method as claimed in claim 2 used to reduce the number of bits in an initial address (AI') formed by a link number and an asynchronous time division multiplexing transmission cell header, where the header includes: a virtual radial link identification field (VPI), a virtual channel identification field (VCI), and a channel attribute field (CA); each radial link being a set of channels;
**characterized in that** it includes at least two steps (E'1, E'2); and **in that**:
- to form each selection address (AS'), it consists in extracting from each initial address (AI') the link number (LI);
- to form each first relative address (AT'1), it consists in extracting from each initial address (AI') a series of bits (n0, n2) which belong to the radial link identification field (VPI);
- to predetermine the first basic addresses (AB1') associated respectively with first formats (MF1') which correspond respectively to the selection addresses (AS'), it consists in taking directly the selection addresses (AS') by joining to them bits of lesser significance and value 0 (0000 0000) ;
- to form each second relative address (AV'2), it consists in extracting from each initial address (AI') a series of bits (n3, n5) which belong to the virtual channel identification field (VCI).

4. A method according to claim 3 **characterized in that** it also includes a third step (E3'); and **in that** to form each third relative address (AV3'), it consists in extracting from each initial address (AI') a series of bits (b1, b2) which belong to the channel attribute field (CA).

## Patentansprüche

1. Verfahren zum Verringern der Anzahl von Bits eines Binärwortes (AI), das eine Folge von Adressen darstellt, die Anfangsadressen genannt werden, **dadurch gekennzeichnet, dass** es wenigstens einen ersten Schritt (E1) umfasst, der nacheinander darin besteht:
- aus jeder Anfangsadresse (AI) wenigstens ein Bit (C1) herauszuziehen, das einen festgelegten Rang hat;
- ausgehend von diesem Bit oder diesen Bits (C1) eine Adresse, Auswahladresse (AS) genannt, zu bilden (1);
- aus jeder Anfangsadresse (AI) eine Folge von Bits (C3, C6) entsprechend einem Format (M1i) herauszuziehen, das unter einer Vielzahl von vorher bestimmten ersten Formaten (M11, M12, M13, M14) in Abhängigkeit von der Auswahladresse ausgewählt wird;
- mit dieser Folge von Bits (C3, C6) ein Binärwort zu bilden (2), das erste relative Adresse (AV1) genannt wird;
- diese erste relative Adresse zu einer Basisadresse (AB(M1i) genannten Adresse addieren, die vorher bestimmt wird und mit dem Format (M1i), das ausgewählt wurde, verbunden ist; um eine erste reduzierte Adresse (AT1) zu erhalten, die eine kleinere Anzahl von Bits aufweist als diejenige der Anfangsadressen (AI) ;
und dass es zum Vorherbestimmen einer mit einem (M1i) der ersten Formate verbundenen Basisadresse (AB(M1i)) darin besteht:
- nacheinander die ersten Formate zu betrachten;
- für die mit dem betrachteten ersten Format unter den ersten Formaten verbundene Basisadresse 0 anzunehmen;
- als Wert für jede entsprechend mit den weiteren ersten Formaten verbundene Adresse die Summe zu nehmen aus: der letzten Basisadresse, die für die ersten Formate bestimmt wurde, die vorher betrachtet wurden, und dem Maximalwert der relativen Adresse, der mittels des letzten vorher betrachteten ersten Formats, erhöht um eine Einheit, erhalten werden kann.

2. Verfahren nach Anspruch 1, **dadurch gekennzeichnet, dass** sie außerdem n-1 aufeinanderfolgende Schritte umfasst, wobei n wenigstens gleich 2 ist; und dass der j-te Schritt, wobei j von 2 bis n variiert, nacheinander darin besteht:
- aus jeder Anfangsadresse (AI) eine j-te Folge von Bis (C2, C4) entsprechend einem Format (Mjk) herauszuziehen, das unter einer Vielzahl von vorher bestimmten j-ten Formaten ausgewählt wird, so dass diese j-te Folge eine Anzahl von Bits aufweist, die kleiner als diejenige der reduzierten Adressen (AT(j-1)) ist, die vom j-1-ten Schritt geliefert werden; wobei das Format mittels einer reduzierten Adresse (AT(j-1)) ausgewählt wird, die vom j-1-ten Schritt geliefert wird;
- mit dieser j-ten Folge von Bits (C2, C4) ein Binärwort AVj) zu bilden, das j-te relative Adresse genannt wird;
- diese j-te relative Adresse (AVj) zu einer Basisadresse (AB(Mjk)) genannten Adresse zu addieren, die vorher bestimmt wird und mit dem Format (Mjk), das ausgewählt wurde, verbunden ist; um eine j-te reduzierte Adresse (ATj) zu erhalten, die die Anfangsadresse (AI) ersetzt und eine kleinere Anzahl von Bits aufweist als diejenige der j-ten reduzierten Adresse (AT(j-1));
und dass es zum Vorherbestimmen der mit einem (Mjk) der j-ten Formate verbundenen Basisadresse (AB(Mjk)) darin besteht:
- nacheinander die j-ten Formate zu betrachten;
- für die mit dem betrachteten ersten Format unter diesen j-ten Formaten verbundene Basisadresse 0 anzunehmen;
- als Wert für jede entsprechend mit den weiteren j-ten Formaten verbundene Basisadresse die Summe aus der letzten Basisadresse, die für die j-ten Formate bestimmt wurde, die vorher betrachtet wurden, und dem Maximalwert der relativen Adresse zu nehmen, der mittels des Formats, das betrachtet wird, erhöht um eine Einheit, erhalten werden kann.

3. Verfahren nach Anspruch 2, das angewendet wird, um die Anzahl von Bits einer Anfangsadresse (AI') zu verringern, die aus einer Verbindungsnummer (LI) und einem Zellenkopf für Übertragungen im asynchronen Zeitmultiplex besteht, wobei dieser Kopf umfasst: ein Identifikationsfeld (VPI) für ein virtuelles Bündel, ein Identifikationsfeld (VCI) für einen virtuellen Kanal und ein Attributfeld (CA) für einen Kanal; wobei jedes Bündel eine Menge von Kanälen ist;
**dadurch gekennzeichnet, dass** es wenigstens zwei Schritte (E'1, E'2) umfasst und dass:
- es zum Bilden jeder Auswahladresse (AS') darin besteht, aus jeder Anfangsadresse (AI') die Verbindungsnummer (LI) herauszuziehen;
- es zum Bilden jeder relativen Adresse (AT'1) darin besteht, aus jeder Anfangsadresse (AI') eine Folge von Bits (n0, n2) herauszuziehen, die zum Identifikationsfeld (VPI) für ein Bündel gehört;
- es zum Bestimmen der ersten Basisadressen (AB1'), die entsprechend zu den ersten Formaten (MF1') gehörigen, die jeweils den Auswahladressen (AS') entsprechen, darin besteht, direkt die Auswahladressen (AS') zu nehmen, wobei ihnen Bits mit geringerem Gewicht und mit dem Wert Null (0000 0000) zuzuweisen;
- es zum Bilden jeder zweiten relativen Adresse (AV2') darin besteht, aus jeder Anfangsadresse (AI') eine Folge von Bits (n3, n5) herauszuziehen, die zum Identifikationsfeld (VCI) für einen virtuellen Kanal gehört.

4. Verfahren nach Anspruch 3, **dadurch gekennzeichnet, dass** es außerdem einen dritten Schritt (E3') umfasst; und dass es zum Bilden jeder dritten relativen Adresse (AV3') darin besteht, aus jeder Anfangsadresse (AI') eine Folge von Bits (b1, b2) herauszuziehen, die zum Attributfeld (CA) für einen Kanal gehört.
